# EUROPEAN PATENT SPECIFICATION

(11) **EP 0 471 133 B1**
(45) Date of publication and mention of the grant of the patent: **18.01.1995**
(21) Application number: 90830384.5
(22) Date of filing: 28.08.1990
(51) Int. Cl.: G11B 23/113

(54) **Apparatus for picking up and guiding in a predetermined path a magnetic tape wound onto a reel in automatic cassette loading machines**
Vorrichtung zum Aufnehmen und Zuführen in einem vorbestimmten Weg eines auf einer Spule aufgewickelten Magnetbandes in einem automatischen Kassettenladegerät
Appareil pour saisir et guider une bande magnétique enroulée autour d'une bobine dans un appareil de chargement automatique de cassettes suivant un trajet prédéterminé

(30) Priority: 06.08.1990 IT 2122790
(43) Date of publication of application: 19.02.1992
(73) Proprietor: TAPEMATIC S.p.A., I-20052 Monza (Milano) (IT)
(72) Inventor: Perego, Luciano, I-20050 Mezzago-Milano (IT)
(74) Representative: Righetti, Giuseppe

(56) References cited:
- EP-A- 0 281 884
- FR-A- 2 353 112
- US-A- 3 643 889

## Description

The present invention pertains to an apparatus in an automatic cassette loading machine including at least a reel, for picking up and guiding in a predetermined path a magnetic tape, commonly referred to as use tape, wound onto said reel, said reel being provided with a closure tab fastening one end of said tape to the reel itself, said apparatus being of the kind comprising: a support arm extending from the main carriage; and a grasping member operatively connected to the support arm, provided with gripping fingers capable of picking up the free end of the closure tab.

It is known that the loading of magnetic tape into cassettes is presently carried out by appropriate automatic machines.

In these loading machines the cassettes to be loaded are picked up, one at a time, from a supply magazine and are then engaged in a loading station where the winding of a predetermined amount of magnetic tape onto the hubs located inside the cassette is automatically carried out. The tape is fed from a big reel commonly referred to as "pancake" which is mounted on a support hub operable in rotation.

By virtue of the high automation degree reached by current loading machines, the operations which must be carried out by hand by an operator are substantially restricted to the periodic arrangement of the cassettes to be loaded into the machine supply magazine as well as the periodic replacement of the empty pancakes.

It is however to be pointed out that the replacement of the pancake on the loading machine does not only involve the removal of the out of tape pancake from the support hub and its replacement by a full pancake; in fact other operations are also needed in order to carry out the engagement of the tape itself, according to a predetermined path, between the different members through which the tape must pass before reaching the cassette in the loading station. In greater detail, the operator must first pick up one end of the tape commonly tastened to the pancake by an adhesive closure tab provided with a free portion projecting outwardly from the pancake itself. Then the tape must be partially unwound from the pancake and pass through a control unit designed to make the motor associated with the pancake support hub run in synchronism with the motor causing the winding of the tape onto the cassette hub. Then the tape must pass over a counting wheel designed to measure the amount of tape wound into the cassette, as well as rest on one or more guide blocks close to which several mechanisms are disposed for carrying out the different dragging, cutting and splicing operations necessary to complete the loading of the tape into the cassette.

It has been found that since it is necessary to dispose the use tape by hand between the above mentioned members, the possibilities of entrusting a single operator with the management of many loading machines are very reduced.

The document EP-A-0 281 884 discloses an automatic cassette loading machine provided with a grasping member carried by a main carriage which is slidably engaged on guide bars extending according to an inclined straight line from side to side of the loading machine itself. The grasping member is movable according to a straight line path a long which the different members, i.e. the control units, the counting reel, the guide blocks etc., of the machine are distributed. More particularly, the grasping member is moved between a first position, in which it grasps the use tape end previously engaged on a holding block disposed along the grasping member path, and a second position in which the tape extends through the members of the loading machine. However, every time the used pancake must be substituted, manual operation are needed in order to disengage the a closure tab fixing the tape end on the circumferential edge of the reel, and to partially unwind the tape in order to engage its end on said holding block.

The main object of the present invention is to eliminate the above drawback, by providing an apparatus adapted to automatically pick up one end of the use tape from the pancake mounted on the support hub and guide it in a predetermined path in order to cause its engagement between the different members of the loading machine.

Another object of the invention is to make said apparatus adapted to be associated with loading machines which are already able to carry out the replacement of the pancakes on the support hub in a completely automatic manner, so as to fully eliminate the necessity for manual interventions when the pancake in use is out of tape. A machine as above specified, to which particular reference will be made in the course of the present description, has been the object of a parallel Italian Patent application filed in the name of the same Applicant to which one can refer for further information, if necessary.

The foregoing and further objects that will become more apparent in the course of the following description are substantially attained by an apparatus in an automatic cassette loading machine including at least a reel, for picking up and guiding in a predetermined path a magnetic tape wound onto said reel, said reel being provided with a closure tab fastening one end of said tape to the reel itself, characterized in that it further comprises: finding means acting on the circumferential edge of the reel for finding the closure tab and locating this latter at a predetermined position on said circumferential edge; first moving means acting on the main carriage for moving the grasping member according to an horizontal direction; second moving means carried by the support arm and acting on the grasping member for moving this latter in a vertical direction, said second moving means cooperating with the first moving means for moving the grasping member according to a predetermined path between members of the loading machine, starting from a raised position in which the grasping member acts on the circumferential edge of the reel in order to pick-up said closure tab, located at said predetermined position.

Further features and advantages will be best understood from the detailed description of a preferred embodiment of an apparatus in an automatic cassette loading machine including at least a reel for picking up and guiding in a predetermined path a magnetic tape wound onto said reel or pancake in accordance with the present invention, given hereinafter by way of non-limiting example with reference to the accompanying drawings, in which:
- Fig. 1 is a perspective fragmentary view showing an automatic cassette loading machine having the apparatus of the invention associated therewith;
- Fig. 2 shows the apparatus of the invention associated with a manipulating unit being part of the machine shown in Fig 1, said manipulating unit being illustrated in a perspective fragmentary view;
- Fig. 3 is a perspective fragmentary view of the manipulating unit seen from the opposite side with respect to the one shown in Fig. 2;
- Fig. 4 is a perspective view of the apparatus of the invention while in operation on a pancake;
- Figs. 5 through 8 diagrammatically show different positionings exhibited by a grasping member being part of the apparatus in reference while a magnetic tape is being arranged in order to make it ready for a cassette loading.

Referring to the drawings, an apparatus in an automatic cassette loading machine including at least a reel, for picking up and guiding in a predetermined path a magnetic tape wound onto said reel in accordance with the present invention has been generally identified by reference numeral 1.

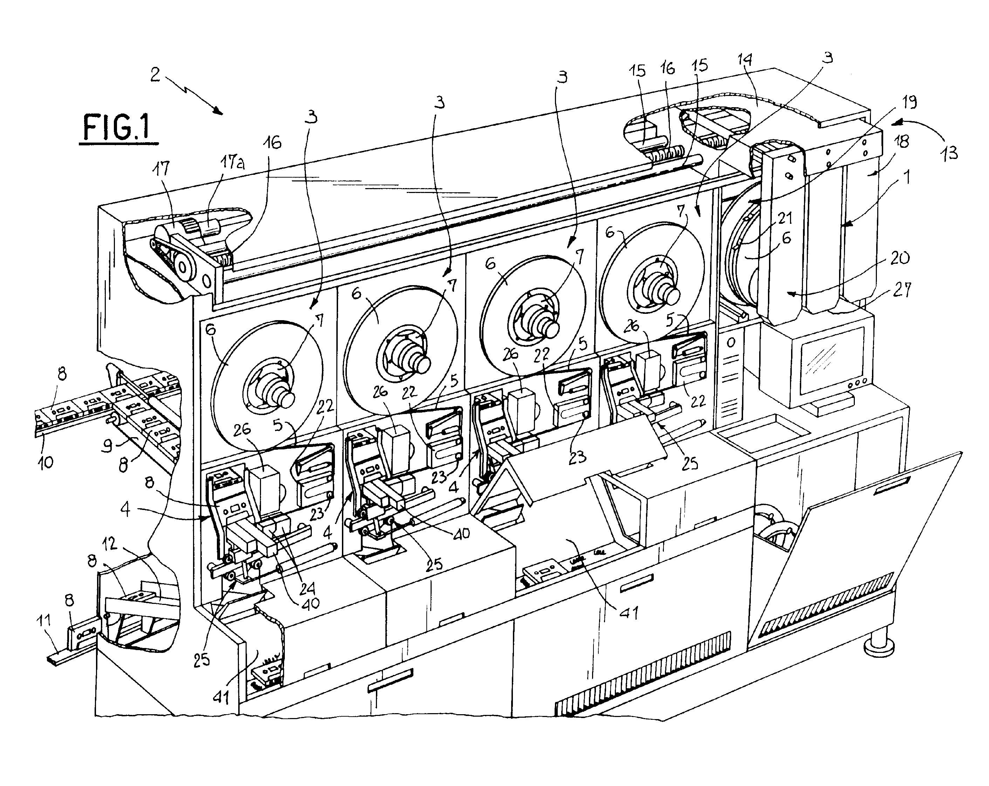

In the example shown the apparatus 1 is associated with an automatic cassette loading machine, generally identified by 2 in Fig. 1, only the essential parts of which will be herein briefly described, as it has already been widely discussed in a parallel Italian Patent Application filed on the same date in the name of the same Applicant.

The cassette loading machine 2 has a plurality of loading modules 3 disposed consecutively in side by side relation, each of them being provided with loading station 4 at which a continuous magnetic tape 5 coming of a pancake 6 mounted on a support hub 7 operable in rotation, is wound into a cassette 8 according to a predetermined amount. The loading stations 4 of the different modules 3 arc individually fed with cassettes 8 by in-feed conveyors 9 terminating at a supply conveyor 10. When the loading has been carried out each cassette 8 is released from the loading station amd drops down to an output conveyor through a discharge chute 12. The loading machine 2 is also provided with a manipulating unit 13 which starts operating each time the pancake 6 of one of the loading modules 3 becomes out of use tape 5. To this end, the manipulating unit 13 is provided with a main carriage 14 horizontally movable by first moving means including guide bars 15 extending horizontally on top of the loading machine 2. The main carriage 14 is movable at right angles to the axes of the pancakes 6 mounted on hubs 7, upon command of a threaded rod 16 driven in rotation by a motor 17 which is controlled by a conventional encoder 17a or technically equivalent means. The encoder 17a sends signals concerning the positioning and displacements of the main carriage 14 to an electronic control box not shown as known per se and conventional and also not of importance to the ends of the invention. Said control box carries out the operating management of the cassette loading machine 2 as a whole.

The main carriage 14 operatively carries a supply device 18 designed to pick up a full pancake 6 from a supply magazine 19 located sideways to the loading modules 3 and holding a number of said pancakes. Also associated with the main carriage 14 is a discharge device 20, disposed in side by side relation to the supply device 18.

When known and conventional sensors detect that one pancake 6 associated with any of the loading modules 3 is out of tape, the discharge device 20 is brought, by moving the main carriage 14, to a position facing the support hub 7 belonging to said module so that it removes the empty pancake 6 therefrom. Subsequently, by a further moving forward of the main carriage 14, the supply device 18 is brought in front of the support hub 7 in order to fit thereon the new pancake 6 loaded with use tape 5 which he had previously picked up from the supply magazine 19.

Structure and operation of the supply 18 and discharge 20 devices, as well as of the support hub 7 and the supply magazine 19 are not described herein in more detail as they have been widely discussed in a parallel Italian Patent Application filed on the same date in the name of the same Applicant.

The tape wound on the new pancake 6 mounted on the respective support hub 7 will have its end 5a fastened in a manner known per se to the pancake itself by means of a closure tab 21. In greater detail, the closure tab 21 has an adhesive portion 21a fastening the end 5a onto the pancake 6 and a free portion 21b projecting outwardly from the pancake itself. The closure tab 21 is adapted to be grasped at its free portion 21b in order to be disengaged from the pancake 6 so that the tape 5 can be partly unwound therefrom and guided in a predetermined path between several members of the cassette loading machine 2 through which the tape 5 must pass before reaching the loading station 4.

In greater detail, in the example shown the tape is conventionally provided to pass first before a control unit 22 adapted to ensure that motors not shown associated with the driving hub 7 and the loading station 4 respectively run in synchronism.

In addition, still in a manner known per se, the tape 5 must pass over a counting wheel 23 having the task of detecting the amount of tape wound into each cassette 8. Finally said tape 5 must reach and rest on one or more guide blocks 24 facing the loading station 4. Operating close to these blocks is a cutter mechanism not shown as known per se, by which the tape is cut when its winding into each cassette 8 is completed and an extraction group designed to extract the so-called leader from the cassette 8, which leader is laid on said guide blocks 24 too and cut into two pieces which are then spliced by a splicing unit 26 to the opposite ends of the tape loaded into the cassette itself.

All operations necessary for the engagement of the tape 5 between the different members mentioned above are carried out by the apparatus 1 in question.

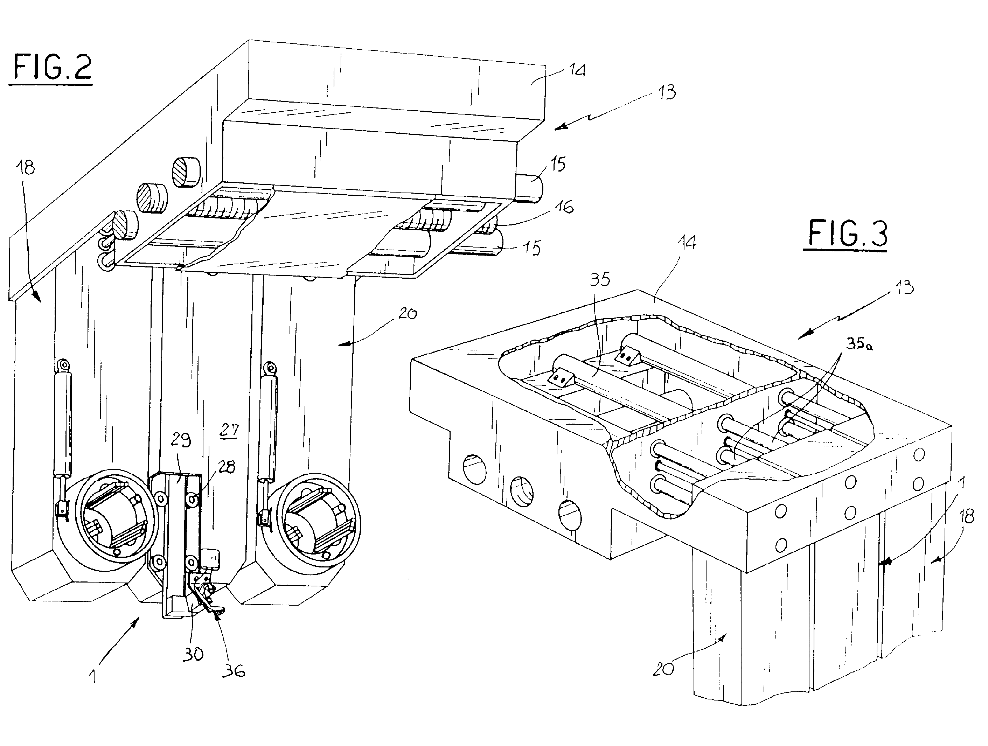

As clearly shown in Figs. 2, 3 and 4, apparatus 1 comprises a support arm 27 extending downwardly from the main carriage 14, according to a direction substantially at right angles to the sense of movement of said carriage. Slidably guided in the support arm 27 in a vertical direction through a plurality of rollers 28, is a driving bar 29 and a grasping member 30 is connected to the lower end of it. The grasping member, not described in detail herein as it is the object of a parallel Italian Patent Application filed in the name of the same Applicant, has a pair of gripping fingers 31 which can be moved close to each other for picking up the closure tab 21, as more clearly explained in the following.

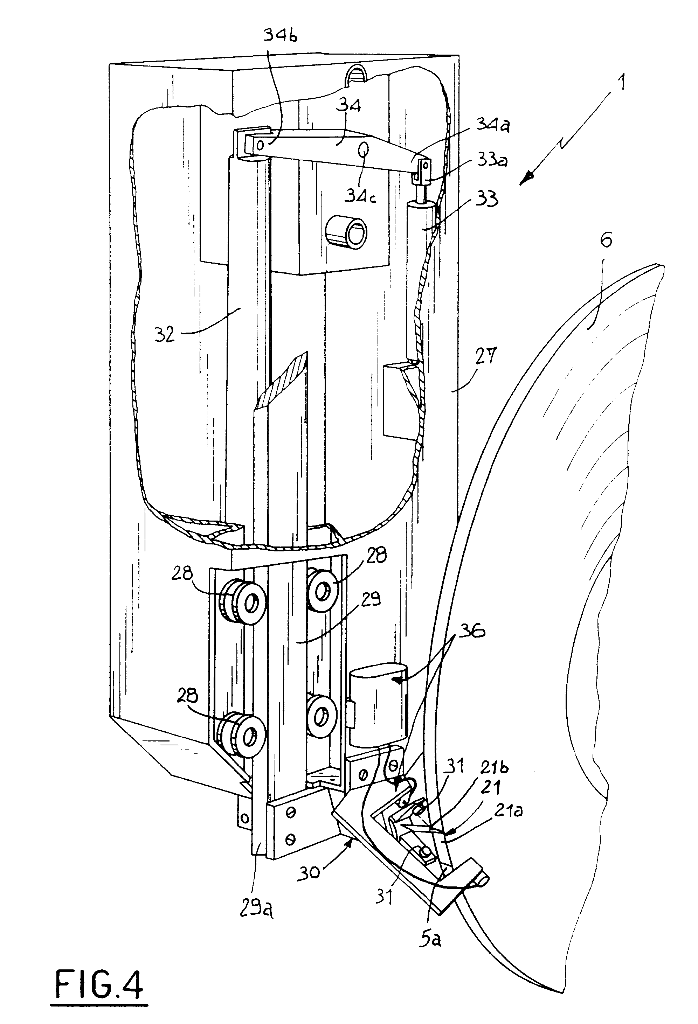

The grasping member 30 is movable vertically or at all events in a direction at right angles to the movements of the main carriage 14, upon command of second moving means including at least a fluid-operated actuator 32 operating between the support arm 27 and the driving bar 29. Preferably an additional fluid-operated actuator 33 is also provided and it acts between the support arm 27 and the main actuator 32 so as to impart a reciprocating motion, as will be clarified in the following, to the grasping member 30 according to a predetermined path when the driving bar 29 is kept to its maximum extension condition upon the action of the main actuator 32. As clearly shown in Fig. 4, the additional actuator 33 is linked to the arm 27 and acts by its rod 33a upon one end 34a of a rocker lever 34 having its fulcrum at 34c and the opposite end 34b of which is linked to the main actuator 32.

Preferably the support arm 27 should also be connected to the main carriage 14 by respective guide members 34 on which said arm is moved, upon command of another fluid-operated actuator 35, in a direction parallel to the axis of the pancakes 6. As a result of the movements of the support arm 27 the grasping member 30 can be moved close to and away from the pancakes 6, from a rest condition in which it is axially spaced apart from said pancake so that it does not interfere with the pancakes 6 and support hubs 7 when the main carriage 14 is being moved, to a working condition in which it substantially operates in the same lying plane as the pancake, as viewed in Fig. 4.

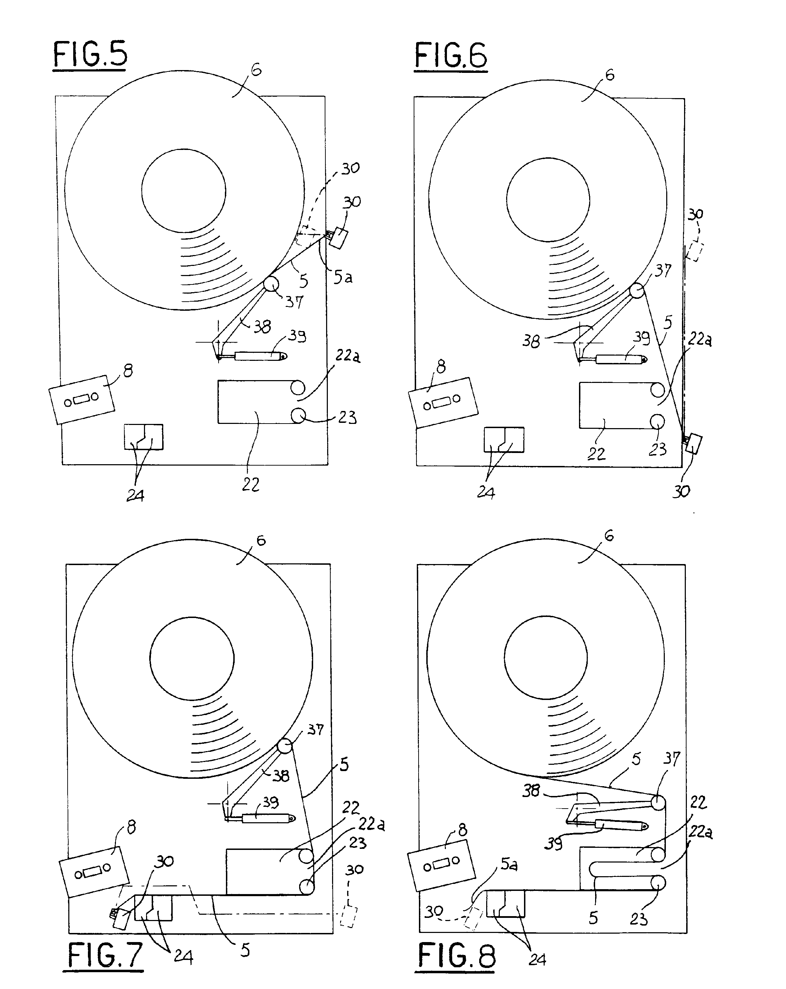

In a preferred embodiment an idler roller 37 is also provided and it is rotatably engaged with one end of a lever 38 having its fulcrum on the loading machine 2 and movable about its pivot point, upon command of a fluid-operated cylinder 39, so as to shift the idler roller from a first working condition in which it acts against the lower peripheral edge of the pancake (Figs. 5. 6 and 7) to keep the tape against said pancake, to a second working condition in which it is moved away downwardly from the pancake itself (Figs. 1 and 8) in order to guide the tape 5 while the cassettes are being loaded.

Operation of apparatus 1 is as follows.

Before the grasping member 30 starts operating, finding means, including a reading member 36 provided with a photoelectric cell, must find the closure tab 21 on the circumferential extension of the pancake 6 and control the positioning of the pancake itself so that, as shown in Fig. 4, said tab can be located at a predetermined point enabling its being easily picked up by the grasping member 30. Said reading means is not described in detail herein as it has been widely discussed in a parallel Italian Patent Application filed on the same date in the name of the same Applicant.

When the closure tab 21 has been positionted to the predetermined point, the grasping member 30, held to its maximum raised position by the main and additional actuators, 32 and 33 respectively, is activated so that the gripping fingers 31 will be moved close to each other and will consequently be able to pick up the free portion 21b of the closure tab 21.

At this point the main carriage 14 is slightly shifted on the guide bars 15 so as to cause the detachment of the closure tab 21 from the pancake 6. Then the grasping member 30, upon command of the main actuator and 32 and optionally with the aid of the additional actuator 33 is moved downwardly as far as the driving bar 29 reaches its maximum extension condition which enables the tape 5 to be pulled in front of an access opening 22a conventionally provided in the control unit 22, as shown in Fig. 6.

Next the main carriage 14 is moved along the guide bars 15 so as to cause a horizontal displacement of the grasping member 30 underneath the control unit 22 towards the guide blocks 24. Under this situation the tape 5 is partially wound over the counting wheel 23.

As the dotted line in Fig. 7 clearly shows, during the horizontal movement of the grasping member 30 upon command of the main carriage 14 also the additional actuator 33 is operated in order to slightly raise the grasping member 30, which enables the latter to ride over the guide blocks 24. When the grasping member 30 has moved past the blocks 24, the additional actuator 33 makes it lower again so that the tape 5 is laid onto said blocks.

At this point the gripping fingers are moved apart from each other and the closure tab 21 is released. Then the actuator 35 drives the support arm 27 away from the pancake 6 and the main and additional actuators 32 and 33 bring the grasping member 30 to its starting position while the main carriage 14 moves backward along the guide bars 15 and brings the manipulating unit 13 again in front of the supply magazine 19.

As seen in Fig. 8, at the end of this operation the tape 5 will be laid on the blocks 24 and held thereon in known manner. Meanwhile the idler roller 37 which had been brought to its first working condition at the mounting of the pancake 6 onto the hub 7 upon the action of the supply device 18, will now reach its second working condition thus enabling the control unit 22 to suck the tape 5 inside it in known manner as shown in Fig. 8.

Alternatively, it will be also possible to drive in rotation the pancake 6 before the idler roller 37 is lowered to its second working position, in order to sufficiently unwind the tape 5 such that it can be sucked in by the control unit 22. Then the tape 5 will be engaged, still in a known and conventional manner, by an additional winding member 40 associated with the extraction group 25 and designed to wind a predetermined amount of tape 5 which will be subsequently dropped down, after the tape has been cut in the region of blocks 24, into a receptor vessel 41 associated with the respective loading module 3.

The present invention attains the intended purposes.

It will be recognized that the apparatus, due to its particular structure, is adaptable to different types of cassette loading machines, since it will be possible to guide the tape according to any path by merely combining the vertical movements imparted to the driving bar 29 with the horizontal movements imparted to the main carriage 14.

In particular, while the apparatus in question has been described with reference to a cassette loading machine capable of automatically carrying out the replacement of the pancakes on the respective hubs, it can be also advantageously associated with less advanced loading machines in which the replacement of the pancakes occurs by hand and is made by an operator. In this case too the use of the apparatus in question would involve an important reduction of time in the operator's work so that a single operator will be able to manage a greater number of loading machines simultaneously.

## Claims

1. An apparatus in an automatic cassette loading machine including at least a reel, for picking up and guiding in a predetermined path a magnetic tape wound onto said reel, said reel being provided with a closure tab (21) fastening one end (5a) of said tape (5) to the reel itself, comprising:
- a main carriage (14) movable in relation to the axis of the reel (6);
- a support arm (27) extending from the main carriage (14);
- a grasping member (30) operatively connected to the support arm (27), provided with gripping fingers (31) capable of picking up the free end of the closure tab (21),
characterized in that it further comprises:
- finding means (36) acting on the circumferential edge of the reel (6) for finding the closure tab (21) and locating this latter at a predetermined position on said circumferential edge;
- first moving means (16,17) acting on the main carriage (14) for moving the grasping member (30) according to an horizontal direction:
- second moving means (29,32,33,34) carried by the support arm (27) and acting on the grasping member (30) for moving this latter in a vertical direction,
said second moving means (29,32,33,34) cooperating with the first moving means (16,17) for moving the grasping member (30) according to a predetermined path between members (22, 23, 24) of the loading machine (2), starting from a raised position in which the grasping member (30) acts on the circumferential edge of the reel (6) in order to pick-up said closure tab (21), located at said predetermined position.

2. An apparatus according to claim 1, characterized in that said first moving means comprises: horizontal guide bars (15) mounted on top of the cassette loading machine (2) and slidably carrying the main carriage (14); a threaded rod (16) driven in rotation by a motor (17) for moving the main carriage (14) along the horizontal guide bars (15).

3. An apparatus according to claim 1, characterized in that said second moving means comprises: a driving bar (29) carrying the grasping member (30) and slidably guided in said support arm (27) according to a vertical direction; at least a primary fluid-operated actuator (32) operating on the driving bar (29) for vertically moving the grasping member (30).

4. An apparatus according to claim 3, characterized in that it further comprises an additional fluid-operated actuator (33) acting between the support arm (27) and the primary fluid-operated actuator (32) to impart a reciprocating vertical movement following a path of predetermined width to the grasping member (30).

5. An apparatus according to claim 4, characterized in that said additional fluid-operated actuator (33) acts on one end (34a) of a rocker lever (34) having its fulcrum on the support arm (27) and the second end (34b) of which engages said primary fluid-operated actuator (32).

6. An apparatus according to claim 2, characterized in that the support arm (27) is movable along guide members (34) connecting it to the main carriage (14) so as to move the grasping member (30) in a direction parallel to the axis of said reel (6) from a rest condition in which it is axially spaced apart from the reel to a working condition in which it substantially operates in the same lying plane as the reel itself in order to engage the closure tab (21) thereof.

7. An apparatus according to claim 2, characterized in that it further comprises an idler roller (37) rotatably engaged with one end of a lever (38) having its fulcrum on the cassette loading machine (2) and movable upon command of a fluid-operated cylinder in order to shift the idler roller (37) from a first working condition in which it acts against the peripheral edge of the reel (6) to a second working condition in which it is spaced apart from said reel (6) so as to guide the magnetic tape (5) while the cassettes are being loaded.

8. An apparatus according to claim 2, characterized in that said finding means comprises a reading member (36) fastened to said support arm and designed to intercept said closure tab (21) and consequently cause the reel (6) to be arranged so that said tab may be located at a predetermined point enabling its being engaged by said grasping member (30).

## Patentansprüche

1. Vorrichtung in einem automatischen Kassettenladegerät mit einem Magnetband, umfassend mindestens eine Spule zur Erfassung und Führung gemäß eines vorbestimmten Weges eines auf der Spule aufgewickelten Magnetbandes, wobei die Spule eine Verschlußzunge (21) aufweist, die auf derselben ein Ende (5a) des Magnetbandes (5) festlegt, wobei die Vorrichtung umfaßt:
- einen Hauptschlitten (14), der gegenüber der Achse der Spule (6) beweglich ist;
- einen Tragarm (27), der sich vom Hauptschlitten (14) wegerstreckt;
- ein Greiforgan (30), das wirksam mit dem Tragarm (27) verbunden und Greiffinger (31) aufweist, die imstande sind, das freie Ende der Verschlußzunge (2) zu ergreifen,
dadurch gekennzeichnet, daß sie überdies umfaßt:
- Auffindmittel (36), die auf dem Umfangsrand der Spule (6) einwirken, um die Verschlußzunge (21) aufzufinden und diese letztere in einer vorbestimmten Stellung auf dem Umfangsrand zu positionieren;
- erste Antriebsmittel (16, 17), die auf den Hauptschlitten (14) einwirken, um das Greiforgan (30) längs einer horizontalen Richtung zu bewegen;
- zweite Antriebsmittel (29, 32, 33, 34), die vom Tragarm (27) getragen werden und auf das Greiforgan (30) einwirken, um dieses letztere in senkrechter Richtung zu bewegen,
wobei die zweiten Antriebsmittel (29, 32, 33, 34) mit den ersten Antriebsmitteln (16, 17) zusammenwirken, um das Greiforgan (30) gemäß einem vorbestimmten Weg zwischen Organen (22, 23, 24) des Kassettenladegerätes (2) ausgehend von einer angehobenen Stellung zu bewgen, in der das Greiforgan (30) auf den Umfangsrand der Spule (6) einwirkt, um die in dieser vorbestimmten Stellung gelegene Verschlußzunge (21) abzuheben.

2. Vorrichtung nach Anspruch 1, dadurch gekennzeichnet, daß die ersten Antriebsmittel umfassen: horizontale Führungsstangen (15), die im oberen Teil des Kassettenladegerätes (2) angebracht sind und gleitbar den Hauptschlitten (14) tragen; eine Schraubspindel (16), die durch einen Motor (17) in Drehbewegung versetzt wird, um den Hauptschlitten (14) längs der horiziontalen Führungsstangen (15) zu bewegen.

3. Vorrichtung nach Anspruch 1, dadurch gekennzeichnet, daß die zweiten Antriebsmittel umfassen: eine Antriebsstange (29), die das Greiforgan (30) trägt und gleitbar im genannten Tragarm (27) längs einer senkrechten Richtung geführt ist; mindestens einen fluidodynamischen Hauptzylinder (32), der auf die Antriebsstange (29) einwirkt, um das Greiforgan (30) senkrecht zu bewegen.

4. Vorrichtung nach Anspruch 3, dadurch gekennzeichnet, daß sie überdies einen fluidodynamischen Hilfszylinder (33) umfaßt, der zwischen dem Tragarm (27) und dem fluidodynamischen Hauptzylinder (32) wirkt, um dem Greiforgan (30) eine senkrechte Auf- und Abwärtsbewegung gemäß einem Weges vorbestimmter Größe zu erteilen.

5. Vorrichtung nach Anspruch 4, dadurch gekennzeichnet, daß der fluidodynamische Hilfszylinder (33) auf ein erstes Ende (34a) eines Kipphebels (34) einwirkt, der am Tragarm (27) angelenkt ist und dessen anderes Ende den fluidodynamischen Hauptzylinder (32) ergreift.

6. Vorrichtung nach Anspruch 2, dadurch gekennzeichnet, daß der Tragarm (27) längs Führungsorganen (35) beweglich ist, die ihn mit dem Hauptschlitten (14) derart verbinden, daß das Greiforgan (30) in einer zur Achse der Spule (6) parallelen Richtung von einem Ruhezustand, in dem es axial von der Spule beabstandet ist, in einen Arbeitszustand zu bringen, in dem es im wesentlichen in derselben Ebene wirkt, in der sich die Spule befindet, um die Verschlußzunge (21) zu ergreifen.

7. Vorrichtung nach Anspruch 2, dadurch gekennzeichnet, daß sie überdies eine Umlenkrolle (37) umfaßt, die drehbar an einem Ende eines Hebels (31) angreift, der am Kassettenladegerät (2) angelenkt und durch Antrieb eines fluidodynamischen Zylinders beweglich ist, um die Umlenkrolle (37) von einer ersten Arbeitsstellung, in der sie gegen den Umfangsrand der Spule (6) wirkt, in eine zweite Arbeitsstellung zu verstellen, in der sie von der Spule (6) beabstandet ist, um das Magnetband (5) während des Ladens der Magnetbandkassetten zu führen.

8. Vorrichtung nach Anspruch 2, dadurch gekennzeichnet, daß die Auffindmittel ein Leseorgan (36) umfassen, das am Tragarm befestigt und dazu bestimmt ist, die Verschlußzunge (21) zu erfassen und folglich die Spule (6) derart bereitzustellen, daß die Verschlußzunge selbst an einer vorbestimmten Stelle angeordnet wird, um von dem Greiforgan (30) ergriffen zu werden.

## Revendications

1. Appareil, dans une machine de chargement automatique de cassettes comprenant au moins une bobine, pour saisir et guider suivant un trajet prédéterminé une bande magnétique enroulée autour d'une bobine, ladite bobine présentant une languette de fermeture (21) fixant sur ladite bobine une extrémité (5a) de ladite bande (5), l'appareil comprenant:
- un chariot principal (14) mobile par rapport à l'axe de la bobine (6);
- un bras support (27) s'étendant depuis le chariot principal (14);
- un organe pinceur (30) relié fonctionnellement au bras support (27), ayant des doigts de préhension (31) capables de saisir l'extrémité libre de la languette de fermeture (21),
caractérisé en ce qu'il comporte en outre:
- des moyens de recherche (36) agissant sur le bord circonférential de la bobine (6) en vue de trouver la languette de fermeture (21) et la positionner à une position prédéterminée sur ledit bord circonférentiel;
- des premiers moyens de mise en mouvement (16, 17) agissant sur le chariot principal (14) pour déplacer l'organe pinceur (30) suivant une direction horinzontale;
- des deuxièmes moyens de mise en mouvement (29, 32, 33, 34) portés par le bras support (27) et agissant sur l'organe pinceur (30) pour déplacer ce dernier selon une direction verticale,
lesdits deuxièmes moyens de mise en mouvement (29, 32, 33, 34) coopérant avec les premiers moyens de mise en mouvement (16, 17) pour déplacer l'organe pinceur (30) suivant un trajet prédéterminé entre des organes (22, 23, 24) de la machine (2) de chargement de cassettes, à partir d'une position relevée dans laquelle l'organe pinceur (30) agit sur le bord circonférentiel de la bobine (6) pour saisir ladite languette de fermeture (21) située à ladite position prédéterminée.

2. Appareil selon la revendication 1, caractérisé en ce que lesdits premiers moyens de mise en mouvement comportent: des barres de guidage horizontales (15) montées à la partie supérieure de la machine (2) de chargement de cassettes et portant le chariot principal (14) de manière coulissante; une tige filetée (16) entraînée en rotation par un moteur (17) pour déplacer le chariot principal (14) le long des barres de guidage horizontales (15).

3. Appareil selon la revendication 1, caractérisé en ce que lesdits deuxièmes moyens de mise en mouvement comportent: une barre d'actionnement (29) portant l'organe pinceur (30) et guidée de manière coulissante dans ledit bras support (27) suivant une direction verticale; au moins un actionneur oléohydraulique primaire (32) opérant sur la barre d'actionnement (29) pour déplacer l'organe pinceur (30) verticalement.

4. Appareil selon la revendication 3, caractérisé en ce qu'il comporte en outre un actionneur oléohydraulique auxiliaire (33) opérant entre le bras support (27) et l'actionneur oléohydraulique primaire (32) pour imprimer à l'organe pinceur (30) un mouvement alternatif vertical suivant un trajet de largeur prédéterminée.

5. Appareil selon la revendication 4, caractérisé en ce que ledit actionneur oléohydraulique auxiliaire (33) opère sur une première extrémité d'un levier basculant (34) ayant son point d'appui sur le bras support (27) et dont l'autre extrémité engage ledit actionneur oléohydraulique primaire (32).

6. Appareil selon la revendication 2, caractérisé en ce que le bras support (27) est mobile le long d'organes de guidage (35) qui le relient au chariot principal (14) de manière à déplacer l'organe pinceur (30) selon une direction parallèle à l'axe de ladite bobine (6) depuis une condition de repos dans laquelle il est écarté axialement de la bobine, jusqu'à une condition de travail dans laquelle il opère sensiblement dans le même plan de disposition que la bobine, pour engager la languette de fermeture (21).

7. Appareil selon la revendication 2, caractérisé en ce qu'il comporte en outre un rouleau de renvoi (37) engagé à rotation à l'une des extrémités d un levier (38) ayant son point d'appui sur l'appareil (2) de chargement de cassettes et mobile sur commande d'un cylindre oléohydraulique pour déplacer le rouleau de renvoi (37) d'une première condition de travail dans laquelle il agit contre le bord périphérique de la bobine (6) à une deuxième condition de travail dans laquelle il est écarté de ladite bobine (6), pour guider la bande magnétique (5) pendant le chargement des cassettes.

8. Appareil selon la revendication 2, caractérisé en ce que lesdits moyens de recherche comportent un organe de lecture (36) fixé audit bras support et destiné à intercepter ladite languette de fermeture (21) et par conséquent disposer la bobine (6) de telle sorte que la languette soit située à un point prédéterminé susceptible de permettre son engagement par ledit organe pinceur (30).
